# EUROPEAN PATENT APPLICATION

(11) **EP 3 928 854 A1**
(43) Date of publication of application: **29.12.2021**
(21) Application number: 20182125.3
(22) Date of filing: 25.06.2020
(51) Int. Cl.: B01D 53/04, B01D 53/26

(54) **GAS DRYING DEVICE WITH DIFFUSION BARRIER**

(71) Applicant: TECAN TRADING AG, 8708 Männedorf (CH)
(72) Inventor: LIEBHARD, Robert, 8050 Zürich (CH); BOLLI, Beat, 8708 Männedorf (CH); FISCHER, Roland, 8340 Hinwil (CH)
(74) Representative: Troesch Scheidegger Werner AG

(57) **Abstract**

A gas drying device (1) comprising a housing (2) with at least one inlet port (3) and at least one outlet port (4), and a volume of desiccant material (5) contained within the housing (2), arranged between said inlet port (3) and said outlet port (4). The housing (2) comprises a form-stable hollow container (2a), and a form-stable cover (2b), and a form-stable divider (7) within the housing, which tightly separates the at least one inlet port (3) from the desiccant material (5). The divider (7) comprises at least one continuous flow path (6) from the inlet port (3) towards the desiccant material (5), so that the diffusion of gas to the desiccant material (5) is reduced or eliminated.

## Description

The invention relates to a gas drying device with a diffusion barrier.

Gas drying devices are known and have been used to protect machines and material from humidity and small particles. For example, laboratory gas drying units are widely used to provide dry air or gas for applications such as blanketing, sample preparation, instrument protection, reaction mixtures, purging, vacuum release, and venting with dry air.

The use of compressed air in sophisticated devices and controls has further driven the need for clean dry air. Atmospheric air contains water vapor, which will begin to condense into liquid water in the compressed air or gas system when the dew point rises above the current temperature, or the air or gas cools past the dew point. Excessive liquid and condensing water in compressed air used in the operation of pneumatic systems, solenoid valves and air motors can be extremely damaging to equipment, tools and processes. It can cause corrosion of air or gas operated instruments, increase wear of moving parts as it washes away lubrication, and it can freeze in control lines in cold weather. Therefore clean, dry compressed air results in better performance efficiency and lower operating costs. Drying technology has advanced and has come into general use. Known compressed air dryers can be located on the input of the air compressor and/or at various locations throughout the distribution system. There are two different categories of compressed air dryers: primary, which includes coalescing, refrigerated, and deliquescent; and secondary, which includes desiccant, absorption, and membrane. The output of a primary dryer can be further processed through a secondary dryer if needed.

Desiccant or absorption dryers operate by absorbing water vapor into a porous media with a high affinity for water such as activated alumina, silica gel or molecular sieve, to bring the pressure dew point of the compressed air to a level in which the water will no longer condense.

Because these dryers absorb and hold the water, the desiccant media becomes saturated and must be periodically replaced. It has been observed in known gas drying devices that the average life-span is less than a year. Even when not used on a regular basis or not used at all, the lifespan of a desiccant cartridge diminishes rapidly due to water vapor diffusing into the desiccant material, where humidity from ambient air is absorbed.

This results in added work and costs, and in an increased risk of contamination of equipment and samples. Gas drying devices have therefore been provided in which the desiccant material is protected from humidity when not in use.

An air dryer containing a solid desiccant for an apparatus which breathes in a cyclic manner and prevents access of air other than that required to permit the apparatus to breathe has been disclosed in document GB1094430A. In this case the introduction of additional amounts of undried air to the desiccant is prevented by including filters or a chamber having a capacity at least equal to the volume of air which passes into the apparatus through the drier in one cycle.

Known diffusion tubes for disk drives as disclosed in US 4,620,248 comprise a flow path confined by a tube, whereas the cross section of the flow path is the inner hollow cross section of the tube. The tube can be of any shape and depending on the material is more or less elastic and flexible. Diffusion tubes in the state of the art however are too large and for most applications require too much space.

US 2006/0032371 A1 and US 2006/0032372 A1 disclose adsorbent breather assemblies for removing contaminants within an enclosure having a fluid inlet or outlet port. Here adsorbent media layers are located between filter layers and adhesive mounting layers and are connected to diffusion tubes. Such filters with diffusion tubes can be used for the housing of electrical and optical equipment such as a hard disk drive.

Diffusion barriers in the state of the art are easily bent and often part of a soft adhesive assembly. They are therefore vulnerable to movements and vibrations, which results in an increased risk of product failure, contamination of equipment and samples, short lifespan of the gas drying device and therefore added work and costs. In addition diffusion barriers in the state of the art are too large and for most applications require too much space.

It is thus an object of the present invention to provide for a gas drying device that does not take up much space, and in which the diffusion barrier is resistant to movements and vibrations.

This is solved by a gas drying device according to claim 1. Preferred embodiments can, for example, be derived from the respective dependent claims.

The invention relates to a gas drying device potentially for a compressed air application. One such exemplary application is an air displacement pipetting system, in which one common vacuum source and one common pressure source feed all pipetting channels, and in which a sample is dispensed by opening the valve to the pressure source for a predefined time.

The gas drying device according to the invention comprises a housing with at least one inlet port and at least one outlet port and a volume of desiccant material contained within the housing, arranged between said inlet port and said outlet port. The housing comprises a form-stable hollow container, and a form-stable cover, and a form-stable divider within the housing that tightly separates the at least one inlet port from the desiccant material. The divider comprises at least one continuous flow path from the inlet port towards the desiccant material that allows gas to flow through the divider.

The form-stable hollow container and cover, and form-stable divider can be made of any form-stable solid material, which can be soft, elastic, and flexible, or rigid, inelastic, and unbending.

The gas drying device according to the invention comprises a form-stable divider that tightly separates the at least one inlet port from the desiccant material. Tightly separating is to be understood as air-tight or hermetically sealed. Besides the gas flowing through the at least one continuous flow path in the divider from the at least one inlet port towards the desiccant material there is therefore no gas flowing from the inlet port to the desiccant material.

According to an embodiment, the gas drying device comprises a divider that forms an integral part of the housing. Integral part is to be understood as made of the same material and in one piece with the housing. Form-stable solid material can comprise an inorganic compound of metal, non-metal or ionic and covalent bonds, e.g. ceramic, an amorphous solid, e.g. glass, a metal alloy, e.g. steel, or preferably a synthetic material that can be molded into a solid object. Examples of such synthetic materials include the thermoplastics polyethylene (PE), polypropylene (PP), polystyrene (PS) and polyvinyl chloride (PVC), composite materials, e.g. fiberglass and carbon fiber, and some metallurgical alloys.

In a preferred embodiment, the gas drying device comprises a housing that is essentially cylindrical in shape. The at least one inlet port and at least one outlet port according to the invention are formed as through holes, whereas the through holes can be of any shape and size, e.g. rounded or square-cut or any combination thereof. In a preferred embodiment of the gas drying device, the at least one inlet port and at least one outlet port are circular and the size of the at least one inlet port corresponds to the cross section of the connecting end of the flow path.

The gas drying device according to the invention comprises a form-stable divider comprising at least one continuous flow path that allows gas to flow from the at least one inlet port through the divider to the desiccant material. The at least one flow path is adapted to reduce or eliminate diffusion of gas, in particular humid air, from the environment to the desiccant material inside the housing.

According to an embodiment, the gas drying device comprises a flow path with a cross section of 10 to 20 mm2 and a length of at least 100 mm, more specifically a flow path with a cross section of 10 to 20 mm2 and a length of between 100 and 250 mm.

In a preferred embodiment, the gas drying device comprises a flow path with a cross section of 12 to 17 mm2 and a length of between 110 and 200 mm.

These dimensions are given through the physical properties of the flow path. The diffusion of gas to the desiccant material shall be reduced or eliminated without diminishing the gas flow rate beyond a threshold value needed for proper functioning of the connected application, e.g. compressed air application. This is achieved by using a flow path with a cross section of 10 to 20 mm2 and a length of at least 100 mm.

According to an embodiment, the gas drying device comprises an inlet barrier that is placed between the desiccant material and the flow path, or comprises an outlet barrier that is placed between the desiccant material and the at least one outlet port, or comprises at least two barriers, one of which is placed between the desiccant material and the flow path, and one of which is placed between the desiccant material and the at least one outlet port. Depending on the dimensions of the flow path, the outlet ports, and the desiccant material, an inlet barrier prevents the desiccant material to move into the flow path, and an outlet barrier prevents the desiccant material to leak through the at least one outlet port.

The inlet and outlet barriers can comprise a mesh, filter, sieve, porous sheet, or any gas permeable material which allows sufficient gas to stream through the gas drying device. When the barrier is made of a material with sufficiently small pores, it additionally serves as a means for eliminating small particles and thereby protects the equipment from contaminations.

In a preferred embodiment, the barrier comprises a nonwoven fabric made of polyethylene (PE), polypropylene (PP), polyester, or nylon monofilament with a pore size of 0.5 to 50 microns. More preferably the barrier comprises a nonwoven polyethylene with a pore size of 5 microns.

According to an embodiment, the gas drying device comprises a divider that is a solid body in the shape of a cylinder, a cube, a cuboid, a square cuboid, a prism, or any three dimensional configuration. Preferably the divider fits the shape of the housing in a way that it can easily be attached to the hollow container or cover, thereby allowing the flow path to be in communication with the inlet port so that gas can flow from the exterior through the flow path to the desiccant material. In a preferred embodiment where the housing is a hollow cylinder, the divider containing the at least one flow path has the form of a cylinder.

According to an embodiment, the divider containing the at least one flow path can be reversibly or irreversibly joined to any part of the gas drying device, most preferably to the housing or the cover. This can be achieved with any fastening element as for example one of the fastening elements known in the art comprising a bayonet lock, a screwed joint, holes, bolts and nuts or bolts and tapped through holes, adhesives, Velcro^{®}, clamps, and form closure, and can alternatively or additionally be attached, glued, welded, soldered, screwed, locked or clamped. Preferred fastening means are reversible without destruction.

According to an embodiment, the gas drying device comprises a divider comprising at least one continuous flow path from the inlet port towards the desiccant material that allows gas to flow through the divider, whereas said flow path is arranged in a shape that is spiral or helical, or any other winding form, e.g. meandering, zigzagging, twisting or coiling. These arrangements, in particular spiral and helical shapes allow for an elongated flow path being embedded in a small compartment and therefore allow to be integrated in a compact housing. Consequently the gas drying device according to the invention can be built as a compact space saving unit that can easily be replaced in an instrument, particularly in a compressed air application.

The cross section of the continuous flow path can be of any round shape, e.g. circular or oval, or can be of any angular shape, e.g. square or hexagonal, or a mix of round and angular shapes, e.g. U-shaped or D-shaped. In a preferred embodiment the flow path comprises a section that is U-shaped.

According to an embodiment, the flow path through the divider is arranged so that a section of the flow path forms a groove that is accessible from the exterior when the divider is separated from another part of the gas drying device.

Depending on the location and orientation of the divider, this other part of the gas drying device can be the hollow container, the cover, a covering plate, or any other part. This embodiment allows access to the flow path without destruction of the gas drying device and/or the diffusion tube. As a result, when the flow path needs to be accessed, e.g. for cleaning when dusty, contaminated, or partially or totally clogged premature replacement of the entire drying device can be avoided thereby saving extra work and costs.

According to an embodiment, the flow path through the divider is arranged so that a section of the flow path forms a groove that is accessible from the exterior when the divider is separated from another part of the gas drying device, and the divider is arranged within the hollow body so that the section of the flow path forming a groove is positioned adjacent to the desiccant material. In this arrangement a covering plate with one or more openings separates the inside of the flow path from the desiccant material. According to the invention there can be one or more openings in the covering plate independent of the number of flow paths 6 and number of inlet ports. The covering plate can be of any shape and of any form-stable solid material, which can be soft, elastic, and flexible, or rigid, inelastic, and unbending, or can form an integral part of the housing. Integral part is to be understood as made of the same material and in one piece with the housing. Form-stable solid material can comprise an inorganic compound of metal, non-metal or ionic and covalent bonds, e.g. ceramic, an amorphous solid, e.g. glass, a metal alloy, e.g. steel, or preferably a synthetic material that can be molded into a solid object. Examples of such synthetic materials include the thermoplastics polyethylene (PE), polypropylene (PP), polystyrene (PS) and polyvinyl chloride (PVC), composite materials, e.g. fiberglass and carbon fiber, and some metallurgical alloys.

According to an embodiment, the gas drying device comprises a desiccant material (hygroscopic substance or drying agent) comprising silica gel. Silica gel's high specific surface area allows it to quickly adsorb moisture onto the surface of its numerous pores.

The gas drying device can comprise one or more of the following common desiccants, or any other hygroscopic substance. Common desiccants include activated charcoal, calcium sulfate, calcium chloride, and molecular sieves (e.g. zeolites).

Other commonly encountered desiccants may be in forms other than solid, and may work through other principles, such as chemical bonding of water molecules.

Although the foregoing invention has been described in some detail for the purpose of illustration, it will be obvious that changes and modifications may be practiced within the scope of the appended claims by those of ordinary skill in the art.

The solution according to the invention, at least in preferred embodiments, inter alia achieves the following advantages:
The gas drying device is built as a compact form-stable separable unit. As a result the complete gas drying device and especially the integrated form-stable diffusion barrier in the form of a flow path are resistant to movements and vibrations, and any other impact from the exterior that could damage the gas drying device. It is therefore more resistant to tearing and crushing and to becoming leaky or break in general.

Another major advantage comes from the configuration of a form-stable hollow container and a form-stable cover, which allows the desiccant material to be easily accessible without damaging neither the gas drying device nor the diffusion barrier. The desiccant material can therefore easily be replaced when saturated, saving costs due to a premature replacement of the gas drying device.

Moreover positioning the cross section of the flow path at the surface of the divider, so that the flow path is laterally open and accessible from the exterior when separated from another part of the gas drying device, allows the diffusion barrier to be accessed, e.g. for cleaning and decontamination without having to break the diffusion barrier and prematurely replace the entire air drying device.

The gas drying device with diffusion barrier according to the invention will consequently have a prolonged lifespan compared to other air drying devices. It will have to be replaced at later time points resulting in lower operating costs, less work and a decreased risk of contamination of equipment and samples.

The flow path in the shape of a spiral or in any similarly compact shape allows the placement in a narrow space saving compartment. Consequently the gas drying device can easily be replaced in an instrument, particularly in a compressed air application, as a consumable by the instrument operator. Also the condensed setup takes up little space on a worktable or inside an instrument and is therefore easier to fit, mount and replace.

Furthermore advantages and conveniences of the invention result from the following description of embodiments based on the drawings.

The invention will be described in detail with respect to the drawings schematically depicting embodiments of the invention. In detail:
Fig. 1a shows a sectional view of a gas drying device according to the invention with a separated cover, and
Fig. 1b shows an excerpt of a sectional view with separated cover of a gas drying device according to the invention, and
Fig. 2 shows a sectional view with separated cover of an example of a gas drying device with inlet and outlet barriers according to the invention, and
Fig. 3 shows an exploded view drawing of an example of a gas drying device according to the invention with a flow path facing the desiccant material, and
Fig. 4 shows an example of a divider containing the flow path of the gas drying devices according to the invention.

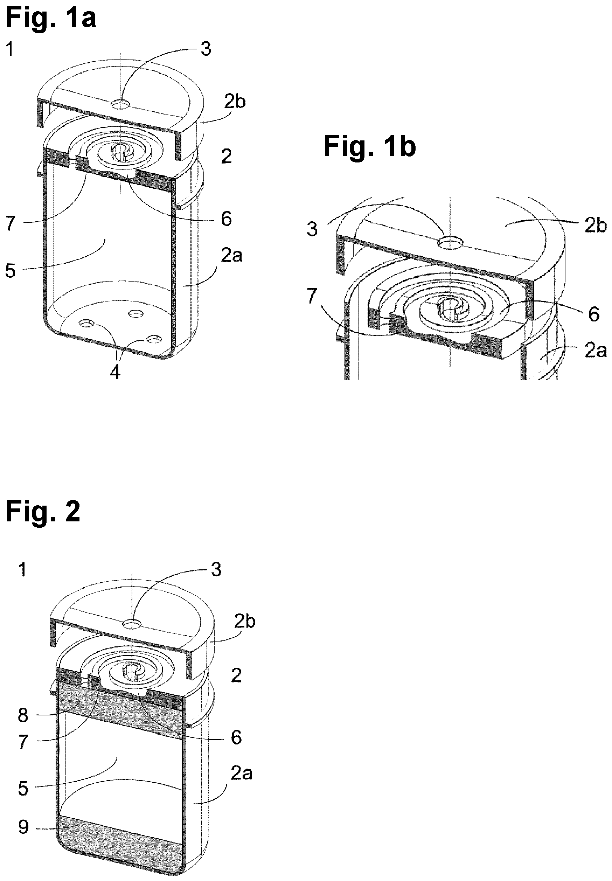

Fig. 1a shows a sectional view of a gas drying device 1 according to the invention with a separated cover 2b revealing the exterior as well as the interior of the housing 2,2a,2b.

The gas drying device 1 shown here comprises a housing 2 with at least one inlet port 3 and at least one outlet port 4, which comprises a form-stable hollow container 2a and a form-stable cover 2b. The gas drying device 1 further comprises a volume of desiccant material 5 contained within the housing 2,2a,2b, arranged between said inlet port 3 and said outlet port 4, and a form-stable divider 7 within the housing 2, which tightly separates the at least one inlet port 3 from the desiccant material 5. The divider 7 comprises at least one continuous flow path 6 from the inlet port 3 towards the desiccant material 5, so that gas can flow from the exterior through the flow path 6 to the desiccant material 5. As shown here the flow path 6 and the at least one outlet port 4 are spatially separated inside the hollow container 2a so that the gas can flow through a large portion of the desiccant material 5 when passing through the gas drying device 1.

The flow path 6 has to be dimensioned so that the diffusion of gas to the desiccant material 5 is reduced or eliminated. This is the case when the flow path 6 has a cross section of 3 to 60 mm² and a length of at least 100 mm, preferably a cross section of 10 to 20 mm² and a length of between 100 and 250 mm, most preferably a cross section of 12 to 17 mm² and a length of between 110 and 200 mm. The form-stable divider 7 can be made of any form-stable solid material, which can be soft, elastic, and flexible, or rigid, inelastic, and unbending, or can form an integral part of the housing 2, 2a, 2b. Integral part is to be understood as made of the same material and in one piece with the housing 2, 2a, 2b. In the gas drying device 1 shown here, the flow path 6 through the divider 7 is arranged so that a section of the flow path 6 forms a groove that is accessible from the exterior when the divider 7 is separated from the cover 2b as shown. The cross section of the groove in the embodiment shown is U-shaped or D-shaped, however the flow path 6 can be of any round or angular shape. The flow path 6 as shown is arranged in a spiral, however can also be helical, or any other winding form, e.g. meandering, zigzagging, twisting or coiling. Any arrangement that allows for an elongated flow path 6 being embedded in a small compartment is according to the invention thus allowing the flow path 6 to be integrated in a compact housing 2.

The divider 7 shown here has a size and shape that allows it to be attached reversibly or irreversibly to the hollow container 2a, or reversibly to the cover 2b, through form closure, a bayonet lock, a screwed joint, adhesives, clamps, bolts, or other fasteners.

**Fig. 1b** shows an excerpt of a sectional view of a gas drying device 1 according to the invention with a separated cover 2b revealing the divider 7 and the exterior as well as the interior of the housing 2,2a,2b.

The gas drying device 1 shown here comprises a divider 7 with a flow path 6 in a setup in which there is no physical connection between the hollow container 2a and the divider 7. In this embodiment the divider 7 needs to be attached to the cover 2b. Preferably this bond is reversible so that the flow path 6 is accessible from the exterior when the hollow container 2a and the cover 2b are separated as shown. Such a bond between the divider 7 and the lid 2b therefore preferably comprises screws, a lock, clamps, Velcro^{®}, or any other reversible fastening element 10.

**Fig. 2** shows a sectional view of an example of a gas drying device 1 according to the invention with separated cover 2b as described and shown for Fig. 1a revealing the divider 7 and the exterior as well as the interior of the housing 2,2a,2b, and additionally comprising one or more barriers 8, 9.

One inlet barrier 8 can be located at the flow path 6. According to an embodiment, the gas drying device 1 comprises an inlet barrier 8 that is placed between the desiccant material 5 and the flow path 6, or comprises an outlet barrier 9 that is placed between the desiccant material 5 and the at least one outlet port 4 (not shown), or comprises at least two barriers 8, 9, one of which is placed between the desiccant material 5 and the inner aperture of the flow path 6, and one of which is placed between the desiccant material 5 and the at least one outlet port 4. Depending on the dimensions of the flow path 6, the outlet ports 4, and the desiccant material 5, barriers 8, 9 prevent the desiccant material 5 to move into the flow path 6 and prevent the desiccant material 5 to leak to the exterior through the outlet ports 4.

The barrier 8, 9 can be a mesh, filter, sieve, porous sheet, or any gas permeable material that allows sufficient gas to stream through the gas drying device 1. When the barrier 8, 9 is made of a material with sufficiently small pores, it additionally serves as a means for eliminating small particles and thereby protects the equipment from contaminations.

In a preferred embodiment, the barrier 8, 9 comprises a nonwoven fabric made of polyethylene (PE), polypropylene (PP), polyester, or nylon monofilament with a pore size of 0.5 to 50 microns. More preferably the barrier 8, 9 comprises a nonwoven polyethylene with a pore size of 5 microns.

The gas drying device 1 shown here comprises a housing 2 with at least one inlet port 3 and at least one outlet port 4, which comprises a form-stable hollow container 2a and a form-stable cover 2b. The gas drying device 1 further comprises a volume of desiccant material 5 contained within the housing 2,2a,2b, arranged between said inlet port 3 and said outlet port 4, and a form-stable divider 7 within the housing 2, which tightly separates the at least one inlet port 3 from the desiccant material 5. The divider 7 comprises at least one continuous flow path 6 from the inlet port 3 towards the desiccant material 5, so that gas can flow from the exterior through the flow path 6 to the desiccant material 5.

Preferably the flow path 6 and the outlet port 4 are spatially separated inside the housing 2 so that the gas can flow through a large portion of the desiccant material 5 when passing through the gas drying device 1.

The flow path 6 has to be dimensioned so that the diffusion of gas to the desiccant material 5 is reduced or eliminated. This is the case when the flow path 6 has a cross section of 3 to 60 mm² and a length of at least 100 mm, preferably a cross section of 10 to 20 mm² and a length of between 100 and 250 mm, most preferably a cross section of 12 to 17 mm² and a length of between 110 and 200 mm. The form-stable divider 7 can be made of any form-stable solid material, which can be soft, elastic, and flexible, or rigid, inelastic, and unbending, or can form an integral part of the housing 2.. Integral part is to be understood as made of the same material and in one piece with the housing 2, 2a, 2b. In the gas drying device 1 shown here, the flow path 6 through the divider 7 is arranged so that a section of the flow path 6 forms a groove that is accessible from the exterior when the divider 7 is separated from the cover 2b as shown. The cross section of the groove in the embodiment shown is U-shaped or D-shaped, however the flow path 6 can be of any round or angular shape, e.g. circular, oval, square or hexagonal, or a mix of round and angular shapes as shown.

The flow path 6 as shown is arranged in a spiral, however can also be helical, or any other winding form, e.g. meandering, zigzagging, twisting or coiling. Any arrangement that allows for an elongated flow path 6 being embedded in a small compartment is according to the invention thus allowing the flow path 6 to be integrated in a compact housing 2.

The divider 7 shown here has a size and shape that allows it to be attached reversibly or irreversibly to the hollow container 2a, or reversibly to the cover 2b, through form closure, a bayonet lock, a screwed joint, adhesives, clamps, bolts, or other fasteners.

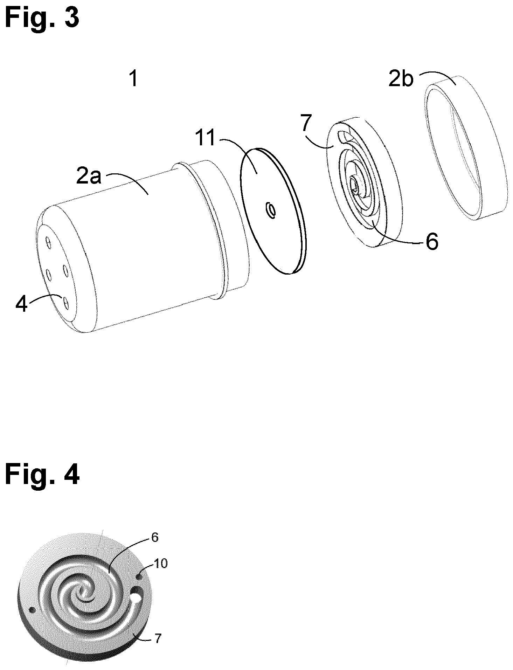

**Fig. 3** shows an exploded view drawing of an example of a gas drying device 1 according to the invention in which the divider 7 is arranged within the hollow body 2a so that the section of the flow path 6 forming a groove is positioned adjacent to the desiccant material 5.

The gas drying device 1 shown here comprises a housing 2consisting of a hollow container 2a and a cover 2b, the cover 2b comprising at least one inlet port 3 (not shown) and the hollow container 2a comprising at least one outlet port 4. The gas drying device 1 further comprises a volume of desiccant material 5 (not shown) contained within the hollow container 2a, arranged between the at least one inlet port 3 and the at least one outlet port 4, and a form-stable divider 7 within the housing 2, 2a, 2b, which tightly separates the at least one inlet port 3 from the desiccant material 5. The divider 7 comprises at least one continuous flow path 6 from the inlet port 3 towards the desiccant material 5, so that gas can flow from the exterior through the flow path 6 to the desiccant material 5. The flow path 6 and the at least one outlet port 4 are spatially separated inside the hollow container 2a so that the gas can flow through a large portion of the desiccant material 5 when passing through the gas drying device 1.

As shown here the divider 7 consists of a flow path 6 partially forming a groove, which is accessible from the exterior when the divider 7 is separated from another part of the gas drying device 1, which in the embodiment shown is the covering plate 11. The divider 7 is arranged within the hollow body 2a so that the section of the flow path 6 forming a groove is positioned adjacent to the desiccant material 5. In this arrangement a covering plate 11 covers the groove of the flow path 6 and separates it from the desiccant material 5. According to the invention the covering plate 11 contains one or more openings independent of the number of flow paths 6 and number of inlet ports 3. Shown is a covering plate 11 with one opening allowing the flow path 6 to communicate with the desiccant material 5. The one opening shown is circular and centered however there could be any number of openings and they could be of any shape and in any location on the covering plate 11. Preferably the one or more openings are located adjacent to the one or more ends of the at least one flow path 6, so that gas can flow from the exterior through the at least one flow path 6 to the desiccant material 5.

The covering plate 11 can be joined to the hollow container 2a. In this case the divider 7 containing the flow path 6 can be of a size and shape that allows it to be used without any additional fastening element 10, or alternatively can be reversibly or irreversibly attached to the cover 2b through form closure, a bayonet lock, a screwed joint, adhesives, clamps, bolts, Velcro^{®} or other fasteners to allow access to the flow path 6 when the cover 2b is separated from the hollow container 2a.

The covering plate 11 can be of any shape and of any form-stable solid material, which can be soft, elastic, and flexible, or rigid, inelastic, and unbending, or can form an integral part of the housing 2, 2a, 2b. Integral part is to be understood as made of the same material and in one piece with the housing 2, 2a, 2b. Form-stable solid material can comprise an inorganic compound of metal, non-metal or ionic and covalent bonds, e.g. ceramic, an amorphous solid, e.g. glass, a metal alloy, e.g. steel, or preferably a synthetic material that can be molded into a solid object. Examples of such synthetic materials include the thermoplastics polyethylene (PE), polypropylene (PP), polystyrene (PS) and polyvinyl chloride (PVC), composite materials, e.g. fiberglass and carbon fiber, and some metallurgical alloys.

The flow path 6 has to be dimensioned so that the diffusion of gas to the desiccant material 5 is reduced or eliminated. This is the case when the flow path 6 has a cross section of 3 to 60 mm² and a length of at least 100 mm, preferably a cross section of 10 to 20 mm² and a length of between 100 and 250 mm, most preferably a cross section of 12 to 17 mm² and a length of between 110 and 200 mm. The divider 7 can be made of any form-stable solid material, which can be soft, elastic, and flexible, or rigid, inelastic, and unbending, or can form an integral part of the cover 2b, i.e. be made of the same material as the cover 2b in one piece.

The cross section of the flow path 6 in the embodiment shown is U-shaped or D-shaped, however it can be of any round or angular shape, or combinations thereof. The flow path 6 as shown is arranged in a spiral, however can also be helical, or any other winding form, e.g. meandering, zigzagging, twisting or coiling. Any arrangement that allows for an elongated flow path 6 being embedded in a small compartment is according to the invention thus allowing the flow path 6 to be integrated in a compact housing 2.

**Fig. 4** shows an example of a divider 7 of the gas drying devices 1 shown in figures 1 to 3. The divider 7 shown has the shape of a disk (cylinder) and is therefore the preferred choice for a hollow cylindrical housing 2,2a,2b as shown in figures 1 to 3. The divider 7 however can be of any three dimensional configuration as for example but not restricted to a cube, a cuboid, a square cuboid, or a cylinder. Preferably the divider 7 containing the flow path 6 fits the shape of the housing 2 in a way that it can be attached to it or is hold in place through form fit resulting in a connection of the at least one flow path 6 with the at least one inlet port 3.

The form-stable divider 7 can be made of any solid material, which can be soft, elastic, and flexible, or rigid, inelastic, and unbending.

In one embodiment of a divider 7 shown here, it comprises at least one fastening element 10, which allows the divider 7 to be attached to the hollow container 2a and/or to the cover 2b. The fastening element 10 shown here comprises a through hole or a tapped blind hole for reversible bonding. Any other fastening element 10 however can be used as for example one of the fastening elements 10 known in the art comprising adhesives, Velcro^{®}, clamps and other fasteners, preferably a reversible fastening element 10.

In the example of a divider 7 shown here, the flow path 6 through the divider 7 is arranged so that a section of the flow path 6 forms a groove that is accessible from the exterior when the divider 7 is separated from another part of the gas drying device 1. The cross section of the groove in the embodiment shown is U-shaped or D-shaped, however the flow path 6 can be of any round or angular shape, e.g. circular, oval, square or hexagonal, or a mix of round and angular shapes as shown.

The flow path 6 as shown is arranged in a spiral, however can also be helical, or any other winding form, e.g. meandering, zigzagging, twisting or coiling. Any arrangement that allows for an elongated flow path 6 being embedded in a small compartment is according to the invention thus allowing the flow path 6 to be integrated in a compact housing 2.

The flow path 6 has to be dimensioned so that the diffusion of gas to the desiccant material 5 is reduced or eliminated. This is the case when the flow path 6 has a cross section of 3 to 60 mm² and a length of at least 100 mm, preferably a cross section of 10 to 20 mm² and a length of between 100 and 250 mm, most preferably a cross section of 12 to 17 mm² and a length of between 110 and 200 mm.

Incidentally it is also possible to implement the invention in a variety of variations in hereby shown examples and aspects of the invention highlighted above.

### REFERENCE SIGNS

- 1: gas drying device
- 2: housing
- 2a: hollow container
- 2b: cover
- 3: inlet port
- 4: outlet port
- 5: desiccant material
- 6: flow path
- 7: divider
- 8: inlet barrier
- 9: outlet barrier
- 10: fastening element
- 11: covering plate

## Claims

1. A gas drying device (1) comprising:
a housing (2) with at least one inlet port (3) and at least one outlet port (4),
a volume of desiccant material (5) contained within the housing (2) and arranged between said inlet port (3) and said outlet port (4),
**characterized in that**
- the housing (2) comprises a form-stable hollow container (2a), and a form-stable cover (2b), - and **in that** a form-stable divider (7) within the housing tightly separates the at least one inlet port (3) from the desiccant material (5), comprising at least one continuous flow path (6) from the inlet port (3) towards the desiccant material (5) .

2. The device according to claim 1, **characterized in that**
- the divider (7) is a solid body.

3. The device according to one of the preceding claims, **characterized in that**
- a section of the flow path (6) forms a groove that is accessible from the exterior when the divider (7) is separated from another part of the gas drying device (1).

4. The device according to one of the preceding claims, **characterized in that**
- the shape of the flow path (6) is coiled.

5. The device according to one of the preceding claims, **characterized in that**
- the divider (7) is reversibly joined to the housing (2).

6. The device according to one of claims 1 to 4, **characterized in that**
- the divider (7) is an integral part of the hollow container (2a) or the cover (2b).

7. The device according to one of the preceding claims, **characterized in that**
- the cover (2b) can be reversibly or irreversibly attached to the hollow container (2a) by a fastening element (10).

8. The device according to claim 7, **characterized in that**
- the fastening element (10) comprises one or more of the following; a bayonet lock, a form closure, a screwed joint, clamps, holes, bolts, nuts, tapped through holes.

9. The device according to one of the preceding claims, **characterized in that**
- the one or more flow paths (6) have a cross section of 3 to 60 mm² and a length of at least 100 mm, or a cross section of 10 to 20 mm² and a length of between 100 and 250 mm, or a cross section of 12 to 17 mm² and a length of between 110 and 200 mm.

10. The device according to one of the preceding claims, **characterized in that**
- an inlet barrier (8) is placed between the desiccant material (5) and the at least one flow path (6).

11. The device according to one of the preceding claims, **characterized in that**
- an outlet barrier (9) is placed between the desiccant material (5) and the at least one outlet port (4).

12. The device according to one of the preceding claims, **characterized in that**
- the desiccant material (5) comprises silica gel.

13. The device according to one of the preceding claims, **characterized in that**
- the housing (2) comprises a covering plate (11) that covers the flow path (6) and separates it from the desiccant material (5).

14. Use of a gas drying device according to any preceding claim in a compressed air application.

15. Use of a gas drying device according to claim 14, **characterized in that**
- the compressed air application is an air displacement pipetting system.
